# EUROPÄISCHE PATENTSCHRIFT

(11) **EP 1 015 091 B1**
(45) Veröffentlichungstag und Bekanntmachung des Hinweises auf die Patenterteilung: **20.11.2002**
(21) Anmeldenummer: 98949941.3
(22) Anmeldetag: 25.08.1998
(51) Int. Cl.: B01D 21/24, B01D 21/34, B01D 21/30, B01D 21/02

(54) **SCHWEBEFILTERVERFAHREN ZUR TRINKWASSERAUFBEREITUNG**
UPFLOW SLUDGE BLANKET PROCESS FOR TREATING DRINKING WATER
PROCEDE DE REFOULEMENT DE BOUES EN NAPPE POUR TRAITEMENT D'EAU POTABLE

(30) Priorität: 30.08.1997 DE 29715622 U
(43) Veröffentlichungstag der Anmeldung: 05.07.2000
(73) Patentinhaber: Firma Dieter Eppler Wasseraufbereitung, 72250 Freudenstadt (DE)
(72) Erfinder: EPPLER, Dieter, D-72250 Freudenstadt (DE)
(74) Vertreter: KOHLER SCHMID + PARTNER
(86) Internationale Anmeldenummer: DE9802496
(87) Internationale Veröffentlichungsnummer: WO99011354

(56) Entgegenhaltungen:
- EP-A- 0 515 918
- EP-A- 0 631 800
- CA-A- 2 099 514
- DE-A- 2 129 349
- DE-A- 3 032 503
- DE-A- 3 319 435
- FR-A- 1 081 187
- FR-A- 2 497 528
- GB-A- 2 294 411

## Beschreibung

Die Erfindung betrifft ein Verfahren zum Betrieb einer Schwebefilteranlage für die Abtrennung von partikelförmigen Verunreinigungen aus zu behandelndem Rohwasser mit mehreren, vorzugsweise beckenförmigen, insbesondere im Querschnitt nach unten trichterförmig sich verjüngenden Reaktorbehältern, die im Bodenbereich einen Rohwasserzulauf und im oberen Bereich einen Klarwasserablauf aufweisen, über den i.w. von den partikelförmigen Verunreinigungen befreites Klarwasser aus den Reaktorbehälter abfließt, sowie mit zwischen oder neben den Reaktorbehältern angeordneten und mit diesen in einer bestimmten Höhe mit Abstand von deren Böden hydraulisch kommunizierenden Schlammabzugskammern, aus denen über eine Schlammabzugseinrichtung aus dem Rohwasser ausgefallene Verunreinigungen in Form von Schlamm abgezogen werden.

Eine solche Schwebefilteranlage und das zugehörige Betriebsverfahren sind bekannt aus W. A. Kljatschko, "Erfahrungen beim Bau und Betrieb von Schlammkontaktanlagen zur Wasseraufbereitung", WWT, 10. Jg. (1960), Heft 3, S. 109.

In der DE 41 17 479 A1 ist ein entleerbares Sedimentiergefäß sowie ein Verfahren zum Entleeren dieses Sedimentiergefäßes beschrieben, wobei das Sedimentiergefäß mehrere Kammern sowie Abzugseinrichtungen für Amalgamschlamm und einen Überlauf für Klarwasser aufweist, und wobei die Zufuhr von verunreinigtem Rohwasser unterbrochen wird, sobald der Flüssigkeitsspiegel im Sedimentiergefäß ein gewisses Niveau überschreitet. Dabei werden die Abzugseinrichtungen der verschiedenen Kammern nacheinander geöffnet bzw. geschlossen.

Da es sich bei dem aus DE 41 17 479 A1 bekannten Sedimentiergefäß um eine völlig anders aufgebaute und physikalisch auch ganz anders wirkende Wasserbehandlungsanlage handelt, ist das bekannte Sedimentiergefäß bezüglich einer Schwebefilteranlage gattungsfremd. Insbesondere wird durch die vollständig andere Verfahrensführung nach der
DE 41 17 479 A1 kein definierter Geschwindigkeitssprung in dem zuströmenden Rohwasser eines Schwebefilterreaktors erzeugt. Der Betrieb einer Schwebefilteranlage muß prinzipiell kontinuierlich ablaufen muß, während durch die nach der
DE 41 17 479 A1 vorgesehene diskontinuierliche Zufuhr von Rohwasser und Entnahme von Schlamm zunächst mit einer wesentlichen, störenden Veränderung gerechnet werden muß.

Die DE 40 06 689 A1 beschreibt eine Vorrichtung und ein Verfahren zur Erfassung der Qualität von Abwassern durch Messung einer geringen Teilmenge des in einem Wasserauffangbekken zugeführten Rohwassers (Regenwasser, Löschwasser etc.).

Eine Wasserbehandlung, insbesondere mittels einer Schwebefilteranlage mit den einganges beschriebenen Merkmalen wird nicht beschrieben. Insbesondere wird nach dem aus der
DE 40 06 689 A1 bekannten Verfahren weder eine definierte Trennung von Rohwasser und Klarwasser mittels eines Geschwindigkeitssprungs des einströmenden Rohwassers bewirkt, noch ist ein diskontinuierlicher Schlammabzug jeweils aus einer Teilmenge einer Vielzahl von Schlammabzugskammern vorgesehen. Vielmehr beschreibt die DE 40 06 689 A1 eine Regelung von Ableitemengen unbehandelten Rohwassers in eine Kanalisation oder zu einer weiteren, nicht näher beschriebenen Behandlung.

Ein Zeitschriftenartikel von M. Köhne "Kontinuierliche Online-Meßverfahren in der Abwassertechnik", Korrespondenz Abwasser, 40. Jg., 10/93, S. 1628 - 1638, beschreibt ein kontinuierliches On-Line-Meßverfahren in der Abwassertechnik, insbesondere eine Schlammspiegelmessung in vertikal durchströmten Nachklärbecken von Kläranlagen. Ein gattungsbildendes Verfahren zum Betrieb einer Schwebefilteranlage, wie es beschrieben ist, wird in dem Artikel nicht angesprochen.

Bei der eingangs genannten Schwebefilteranlage vom Typ "Korridor" gelangt das zu behandelnde Wasser durch eine Rohwasserverteilungsleitung von unten in den Bodenbereich eines trichterförmigen Aufstromreaktors. Durch vorherige Zugabe von Flockungsmitteln bilden sich Flocken von partikelförminen Verunreinigungen im Wasser im unteren Trichterbereich. Da diese Flocken geringfügig schwerer sind als das Wasser, sammeln sie sich hauptsächlich im unteren Teil des Trichters an.

Um ein Aufströmen der Flocken in die Klarwasserzone im oberen Bereich des Aufstromreaktors zu verhindern, wird ein Geschwindigkeitssprung in der Strömungsgeschwindigkeit des Wassers von ca. 10 bis 20 % erzeugt, indem aus dem trichterförmigen Aufstromreaktor in einer bestimmten Höhe mit Abstand vom Boden ein Teilabfluß des strömenden Wassers in ein zweites Korridorsystem ermöglicht wird, das ungefähr 10 % der Oberfläche der erstgenannten Kammer aufweist. Dadurch wird die Geschwindigkeit v_{F} des aus dem Rohwasserzulauf aufströmenden Rohwassers in der Klarwasserzone im oberen Bereich des Reaktorbehälters auf eine ca. 10 bis 20 % niedrigere Aufströmgeschwindigkeit v_{K} verringert. Durch diesen Geschwindigkeitssprung soll eine möglichst scharfe Trennung zwischen den Flocken und dem Klarwasser hervorgerufen werden, so daß sich in der entsprechenden Höhe des Reaktorbehälters ein Flockenspiegel bildet und in der Klarwasserzone möglichst keine Flocken mehr vorhanden sind.

Aus dem zweiten Korridorsystem wird dann der von den abgesunkenen Flocken im Bodenbereich gebildete Überschußschlamm nach unten abgezogen. Der Reinigungsgrad dieses Verfahrens soll laut Literatur (G. Fischer, "Beitrag zum Schwebefilterverfahren - seine Wirkungsweise bei der Enteisenung von Grundwasser", KDT Dresden, veröffentlicht in BWT, 17. Jg. (1967), Heft 4) etwa 70 bis 80 % betragen. Dieses System wird weitgehend in allen Ländern Osteuropas in den dortigen Wasserwerken als Flockungs- und Vorreinigungsstufe verwendet. Es kann auch als Enthärtungs- und Aufhärtungsstufe eingesetzt werden.

In dem oben zitierten Artikel von Fischer (1967) ist jedoch im letzten Absatz vermerkt, daß das Verfahren "wegen der technologisch bedingten Störanfälligkeit aber nur dort angewendet werden sollte, wo ein annähernd konstanter Betrieb ohne kurzfristige Schwankungen der Wasserqualität und -menge zu erwarten ist".

Die Ursache dieses technologischen Mangels liegt darin, daß der Schlammabzug mit den Schlammabzugsrohren aus dem Überschußschlammbecken in Ermangelung von Schiebern im Rohwasserzulauf, die die Behälter einer jeden Korridoreinheit voneinander trennen würden, auch eine Absenkung des Wasserspiegels im jeweiligen Zulaufbecken verursacht, da die Behälter hydraulisch miteinander verbunden sind.

In der Flockenschicht im oberen Drittel des Trichters findet beim Schlammentfernen eine Umkehr der Beschleunigung der Fließrichtung und der Flockenschicht hin zum seitlich gelegenen Schlammabzug statt. Dies hat zur Folge, daß die vorherige klare Trennung zwischen Flocken und Klarwasserschicht wieder aufgehoben wird und sich in der vormaligen Klarwasserzone eine Flockenwolke bildet.

Zwar hatte man ursprünglich bei den Anlagen Handschieber im Rohwasserzulauf vorgesehen, die jedoch in der Folge praktisch nie betätigt wurden, da man für ein einmaliges Schlammabziehen bei einer derartigen Anlage zwischen 16 und 22 Schieber hätte bedienen müssen, was einen erheblichen Mehraufwand verursacht und den Wasserwerksbetrieb beeinträchtigt hätte. Aufgrund der hydraulischen Verbindung der einzelnen Korridoreinheiten hat jedoch diese Vorgehensweise zur Folge, daß während des Schlammabzugs kein Klarwasser mehr im gesamten System überläuft, so daß während der Zeit der Entschlammung die weitere Wasserwerksbeschickung mit Wasser der nachfolgenden Reinigungsstufen jeweils unterbrochen ist.

Derartige Schwebefiltereinheiten vom Typ "Korridor" wurden bis zum Jahre 1989 immer nach dem gleichen System in allen Ländern Osteuropas hergestellt, sind bis zum heutigen Tag noch in Betrieb und leiden an der in der obigen Veröffentlichung erwähnten technologisch bedingten Störanfälligkeit. Grundlegende Verbesserungen wurden seitdem nicht durchgeführt.

Die in den Ländern Osteuropas üblichen Wasserwerke erreichen aufgrund der vorgenannten hydraulischen Schwierigkeiten ihre vorgesehene maximale Ausbauwassermenge nicht, sondern lediglich Werte bis etwa 60 bis 70 % derselben. Viele derartige Anlagen haben derzeit nur eine mögliche Kapazität im Schwebeverfahren von ca. 50 %.

Aufgabe der vorliegenden Erfindung ist es daher, ein Verfahren zum Betrieb einer Schwebefilteranlage der eingangs beschriebenen Art vorzustellen, bei dem die obengenannten technologischen Mängel nicht auftreten, wodurch eine Steigerung der für das jeweilige Wasserwerk vorgesehenen Ausbauwassermenge auf 100 % ihres Sollwerts für die Durchflußkapazität ermöglicht wird.

Erfindungsgemäß wird auf ebenso überraschend einfache wie wirkungsvolle Art und Weise diese Aufgabe dadurch gelöst, daß zur gleichen Zeit jeweils nur aus einer Teilmenge der Schlammabzugskammern der Schwebefilteranlage, vorzugsweise nur jeweils aus einer einzigen Schlammabzugskammer Schlamm abgezogen wird, und daß während des Schlammabzuges die Rohwasserzuläufe der unmittelbar hydraulisch mit den entsprechenden Schlammabzugskammern in Verbindung stehenden Reaktorbehälter mittels Schiebereinrichtungen abgesperrt und nach dem Schlammabzug wieder geöffnet werden.

Auf diese Weise werden diejenigen Betriebseinheiten der Anlage, aus denen gerade Schlamm abgezogen wird, hydraulisch von den übrigen Einheiten entkoppelt, welche währenddessen ungestört weiterlaufen können. Der Betrieb der Anlage bleibt damit auch während des Schlammabzugs aus einem der Behälter stabil.

Beim Schlammabzug aus einer Schlammabzugskammer wird natürlich immer auch ein gewisser Teil des Schlammes aufgewirbelt und in den Bereich der Klarwasserzone eingetragen. Durch Anwendung des erfindungsgemäßen Verfahrens wird jedoch die Verschlechterung der Klarwasserqualität nur auf wenige, vorzugsweise auf eine einzige Betriebseinheit beschränkt, so daß sich durch Verdünnung nach Wiederanfahren des Rohwasserzuflusses zu der entschlammten Einheit lediglich eine begrenzte maximale Verschlechterung der Ablaufqualität des Klarwassers im Verhältnis der Anzahl der aktuell entschlammten Einheiten zur Anzahl der währenddessen weiterbetriebenen Einheiten ergeben kann. Bei lediglich einer einzigen aktuell entschlammten Einheit und neun weiterbetriebenen Einheiten läge die maximale Verschlechterung der Ablaufqualität aus dieser Stufe bei 10 %. Bei den bisher üblichen Betriebsverfahren hingegen verschlechterte sich die Ablaufqualität des Klarwassers relativ betrachtet beispielsweise hinsichtlich der Enteisenung von 1 mg Fe im Ablauf auf 2 bis 3 mg Fe während eines Zeitraums von 30 min. Die durch die einfache erfindungsgemäße Maßnahme erzielte Verbesserung ist verglichen damit ganz enorm.

Besonders bevorzugt ist eine Variante des erfindungsgemäßen Verfahrens, bei der der Volumenstrom des abgezogenen bzw. ablaufenden Klarwassers aus der gesamten Schwebefilteranlage permanent gemessen und durch Regelung des Volumenstroms des zugeführten Rohwassers auf einen einstellbaren konstanten Wert geregelt wird. Dadurch kann in Verbindung mit den obengenannten erfindungsgemäßen Maßnahmen bei im wesentlichen gleichbleibender Ablaufqualität des erzeugten Klarwassers eine definierte, insbesondere gleichbleibende Ablaufleistung garantiert werden, so daß die nachfolgenden Stufen des Wasserwerks vorhersehbar und konstant beschickt werden können.

In den Rahmen der Erfindung fällt auch eine Schwebefilteranlage zur Durchführung des erfindungsgemäßen Verfahrens, die die eingangs beschriebenen Vorichtungsmerkmale aufweist, und bei der die Schiebereinrichtungen ferngesteuert elektrisch, pneumatisch oder hydraulisch betätigbar sind. Während bei den vorbekannten Schwebefilteranlagen vom Typ "Korridor" zumindest anfänglich handbetriebene Schieber im Rohwasserzulauf eingesetzt wurden, die aber, wie oben erwähnt, beim Schlammabziehen normalerweise nicht betätigt wurden, da bei üblicherweise 8 bis 22 nebeneinandergebauten Korridoren-Einheiten 8 bis 22 Schieber per Hand hätten betätigt werden müssen, wird durch die erfindungsgemäßen ferngesteuert betätigbaren Schiebereinrichtungen ein vernünftiger Betriebsablauf einer solchen Schwebefilteranlage in einem Wasserwerk erst ermöglicht.

Von einer Leitwarte im Wasserwerk aus kann nun eine einzige Bedienungsperson per Knopfdruck eine oder eine begrenzte Anzahl von Korridor-Einheiten von der Rohwasserzufuhr absperren und danach, vorzugsweise ebenfalls ferngesteuert, den Schlammabzug in diesen Einheiten in Gang setzen. Nach Abschluß des Schlammabzugs und ggf. einer gewissen Wartezeit bis zum Setzen der aufgewirbelten Schlammflocken kann dann ebenfalls ferngesteuert die Rohwasserzufuhr zu den entschlammten Einheiten wieder geöffnet und möglicherweise andere Einheiten auf dieselbe Art und Weise entschlammt werden.

Bei der erfindungsgemäßen Schwebefilteranlage ist zudem eine Meßvorrichtung zur Messung des Volumenstroms an abgezogenem bzw. ablaufendem Klarwasser vorgesehen. Damit kann der Volumenstrom des abgeführten Klarwassers auf einen einstellbaren konstanten Wert geregelt werden, was, wie oben beschrieben, einen gleichmäßigen Betriebsablauf der Anlage ermöglicht.

Die Meßvorrichtung umfaßt einen Füllstandsmesser zur Messung des Klarwasserspiegels in den Behältern der Schwebefilteranlage sowie eine Recheneinheit zur Berechnung des Volumenstroms an abfließendem Klarwasser aufgrund der Höhe des Klarwasserspiegels unter Berücksichtigung der aktuellen Öffnungsquerschnitte der Rohwasserzuläufe. Damit kann auf einfache Weise, nämlich durch bloße Füllstandsmessung unter Zuhilfenahme eines Kleinrechners, der auch die aktuellen Öffnungsquerschnitte der Rohwasserzuläufe berücksichtigt, welche beispielsweise über elektrische Signale von einfachen Weggebern an den Rechner gemeldet werden können, der abfließende Volumenstrom an Klarwasser und damit die aktuelle Ablaufleistung der Schwebefilteranlage bestimmt werden.

Vorteilhafterweise wird die Recheneinheit Teil eines Mikroprozessors sein, der neben der Auswertung der gemeldeten Meßwerte über Fernsteuerung Regelsignale an entsprechende Schiebereinrichtungen abgibt, um den ablaufenden Volumenstrom auf einen gewünschten konstanten Wert zu regeln.

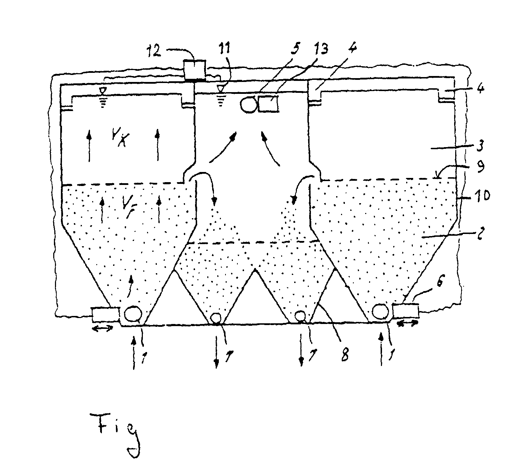

Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Die Figur zeigt einen schematischen Vertikalschnitt durch eine Ausführungsform der erfindungsgemäßen Schwebefilteranlage.

Die erfindungsgemäße Schwebefilteranlage umfaßt mehrere Reaktorbehälter 10, die den üblichen rechteckigen Querschnitt aufweisen. Zur Abtrennung von partikelförmigen Verunreinigungen wird zu behandelndes Rohwasser über einen Rohwasserzulauf 1 im Bodenbereich eines Reaktorbehälters 10, der trichterförmig verjüngt ist, mit einer Hauptgeschwindigkeitskomponente nach oben eingeströmt. Durch Zugabe von Flockungsmitteln bilden sich Flocken der partikelförmigen Verunreinigungen des Rohwassers, die sich in einer Flokkungszone 2 im unteren Behälterbereich sammeln.

Durch seitlichen Ablauf eines Teiles des Rohwassers in zwischen den Reaktorbehältern 10 angeordnete Schlammabzugskammern 8 wird ein Geschwindigkeitssprung und damit ein Flokkenspiegel 9 erzeugt, der die Flockenzone 2 von einer Klarwasserzone 3 im oberen Bereich des Reaktorbehälters 10 trennt. Über Klarwasserabläufe 4 sowie einen Klarwasserabzug 5 kann das behandelte Wasser aus der Schwebefilteranlage ablaufen bzw. abgezogen werden. Im Bodenbereich der Schlammabzugskammern 8 sind jeweils Schlammabzüge 7 vorgesehen, über die der eingedickte Schlamm aus den Schlammabzugskammern 8 entfernt werden kann.

Erfindungsgemäß sind am Rohwasserzulauf 1 eines jeden Reaktorbehälters 10 ferngesteuert betätigbare, vorzugsweise elektrisch, pneumatisch oder hydraulisch bewegliche Schiebereinrichtungen 6 angeordnet, mit denen der jeweilige Rohwasserzulauf während des Schlammabzugs aus einer mit dem entsprechenden Reaktorbehälter 10 verbundenen Schlammabzugskammer 8 abgesperrt und danach wieder geöffnet werden kann.

Schematisch ist auch eine Meßvorrichtung 11 eingezeichnet, die permanent den Volumenstrom an abgezogenem bzw. ablaufendem Klarwasser messen kann. Im gezeigten Ausführungsbeispiel ist die Meßvorrichtung 11 ein Füllstandsmesser zur Messung des Klarwasserspiegels. Die Meßvorrichtung 11 ist mit einer Recheneinheit 12 verbunden, welche auch die aktuellen Öffnungsquerschnitte der Rohwasserzuläufe 1 über elektrische Meßsignale von in der Zeichnung nicht dargestellten Weggebern erhält, woraus die Recheneinheit 12 dann den Volumenstrom des abfließenden Klarwassers berechnen kann. Insbesondere kann die Recheneinheit 12 auch Teil eines Mikroprozessors sein, der eine entsprechende Schiebersteuerung zur automatischen Volumenstromregelung vornehmen kann.

Desweiteren kann auch ein Regelelement 13, insbesondere ein fernsteuerbarer Schieber, zur Regelung des Volumenstromes des aus den Schlammabzugskammern 8 über den Klarwasserabzug 5 abgezogenen Klarwassers vorgesehen sein.

Bei in der Zeichnung nicht dargestellten Ausführungsformen können zusätzlich auch insbesondere elektrisch, pneumatisch oder hydraulisch betätigte, vorzugsweise ferngesteuerte Schieber zur Regulierung des Volumenstroms des abgezogenen Schlammes und/oder des abgezogenen Klarwassers vorhanden sein.

Vorzugsweise ist auch eine in der Zeichnung nicht dargestellte Zeitschaltuhr vorhanden, mit der die entsprechenden Schieber zu bestimmten, voreingestellten Zeiten betätigt werden können.

## Patentansprüche

1. Verfahren zum Betrieb einer Schwebefilteranlage für die Abtrennung von partikelförmigen Verunreinigungen aus zu behandelndem Rohwasser mit mehreren, vorzugsweise bekkenförmigen, insbesondere im Querschnitt nach unten trichterförmig sich verjüngenden Reaktorbehältern (10), die im Bodenbereich einen Rohwasserzulauf (1) und im oberen Bereich einen Klarwasserablauf (4) aufweisen, über den i.w. von den partikelförmigen Verunreinigungen befreites Klarwasser aus den Reaktorbehältern (10) abfließt, sowie mit zwischen oder neben den Reaktorbehältern (10) angeordneten und mit diesen in einer bestimmten Höhe mit Abstand von deren Böden hydraulisch kommunizierenden Schlammabzugskammern (8), aus denen über eine Schlammabzugseinrichtung (7) aus dem Rohwasser ausgefallene Verunreinigungen in Form von Schlamm abgezogen werden,
**dadurch gekennzeichnet,**
**daß** zur gleichen Zeit jeweils nur aus einer Teilmenge der Schlammabzugskammern (8) der Schwebefilteranlage, vorzugsweise nur jeweils aus einer einzigen Schlammabzugskammer (8) Schlamm abgezogen wird, und daß während des Schlammabzuges die Rohwasserzuläufe (1) der unmittelbar hydraulisch mit den entsprechenden Schlammabzugskammern (8) in Verbindung stehenden Reaktorbehälter (10) mittels Schiebereinrichtungen (6) abgesperrt und nach dem Schlammabzug wieder geöffnet werden.

2. Verfahren nach Anspruch 1, **dadurch gekennzeichnet, daß** der Volumenstrom des abgezogenen bzw. ablaufenden Klarwassers aus der gesamten Schwebefilteranlage permanent gemessen und durch Regelung des Volumenstroms des zugeführten Rohwassers auf einen einstellbaren konstanten Wert geregelt wird.

3. Verfahren nach Anspruch 1 oder 2, **dadurch gekennzeichnet, daß** die Schiebereinrichtungen (6) ferngesteuert elektrisch, pneumatisch oder hydraulisch betätigt werden.

4. Schwebefilteranlage für die Abtrennung von partikelförmigen Verunreinigungen aus zu behandelndem Rohwasser mit mehreren, vorzugsweise beckenförmigen, insbesondere im Querschnitt nach unten trichterförmig sich verjüngenden Reaktorbehältern (10), die im Bodenbereich einen Rohwasserzulauf (1) und im oberen Bereich einen Klarwasserablauf (4) aufweisen, über den i.w. von den partikelförmigen Verunreinigungen befreites Klarwasser aus den Reaktorbehältern (10) abfließt, sowie mit zwischen oder neben den Reaktorbehältern (10) angeordneten und mit diesen in einer bestimmten Höhe mit Abstand von deren Böden hydraulisch kommunizierenden Schlammabzugskammern (8), aus denen über eine Schlammabzugseinrichtung (7) aus dem Rohwasser ausgefallene Verunreinigungen in Form von Schlamm abgezogen werden,
**dadurch gekennzeichnet,**
**daß** ferngesteuerte, elektrisch, pneumatisch oder hydraulisch betätigbare Schiebereinrichtungen (6) vorgesehen sind, mit denen der Rohwasserzulauf (1) eines jeden Reaktorbehälters (10) während der Schlammentnahme aus der mit dem jeweiligen Reaktorbehälter (10) hydraulisch kommunizierenden Schlammabzugskammer (8) abgesperrt und nach dem Schlammabzug wieder geöffnet werden kann, daß eine Meßvorrichtung (11) zur permanenten Messung des Volumenstroms an abgezogenem bzw. ablaufendem Klarwasser vorgesehen ist, die einen Füllstandsmesser zur Messung des Klarwasserspiegels in den Behältern der Schwebefilteranlage sowie eine Recheneinheit (12) zur Berechnung des Volumenstroms an abfließendem Klarwasser aufgrund der Höhe des Klarwasserspiegels unter Berücksichtigung der aktuellen Öffnungsquerschnitte der Rohwasserzuläufe (1) umfaßt, und daß ein Regelelement (13) zur Regelung des Volumenstromes des aus den Schlammabzugskammern (8) abgezogenen Klarwassers vorgesehen ist.

## Claims

1. Method for operating an upflow sludge blanket filtering plant for separating particle-shaped impurities from untreated water to be treated with several, preferably basin-shaped reactor containers (10) which have in particular a cross-section tapering like a funnel towards the bottom and have an untreated water inlet (1) in the bottom region and a clear water discharge (4) in the upper region via which substantially clear water released from the particle-shaped impurities flows away from the reactor containers (10) and with sludge discharge chambers (8) disposed between or next to the reactor containers (10) and communicating hydraulically therewith at a certain level at a separation from their bottoms, from which impurities in the form of sludge precipitated from the untreated water are discharged via a sludge discharge means (7),
**characterized in that**
simultaneously sludge is removed only from a partial amount of the sludge discharge chambers (8) of the upflow sludge blanket filtering plant, preferably from only one single sludge discharge chamber (8) and during discharge of sludge, the untreated water inlets (1) of the reactor containers (10) which are in direct hydraulic connection with the corresponding sludge discharge chambers (8) are blocked by slider means (6) and opened again after discharge of the sludge.

2. Method according to claim 1, **characterized in that** the volume flow of the withdrawn or discharged clear water from the entire upflow sludge blanket filtering plant is permanently measured and controlled through regulation of the volume flow of the supplied untreated water to an adjustable constant value.

3. Method according to claim 1 or 2, **characterized in that** the slider means (6) are electrically, pneumatically or hydraulically remotely controlled.

4. Upflow sludge blanket filtering plant for separating particle-shaped impurities from untreated water to be treated with several, preferably basin-shaped reactor containers (10) which have a cross-section tapering like a funnel towards the bottom, and have an untreated water inlet (1) in the bottom region and a clear water discharge (4) in the upper region via which substantially clear water released from the particle-shaped impurities flows away from the reactor containers (10) and with sludge discharge chambers (8) disposed between or next to the reactor containers (10) and communicating hydraulically therewith at a certain level at a separation from their bottoms, from which impurities in the form of sludge precipitated from the untreated water are discharged via a sludge discharge means (7), **characterized in that** remotely-controlled slider means (6) which can be actuated electrically, pneumatically or hydraulically are provided through which the untreated water inlet (1) of each reactor container (10) can be blocked during the removal of sludge from the sludge discharge chamber (8) which hydraulically communicates with the respective reactor container (10), and can be opened again after discharge of sludge, that a measuring device (11) for permanent measurement of the volume flow of the withdrawn or discharged clear water is provided which comprises a level meter for measuring the clear water level in the containers of the upflow sludge blanket filtering plant and a computing unit (12) for calculating the volume flow of discharged clear water due to the height of the clear water level taking into consideration the current opening cross-sections of the untreated water inlets (1) and that a regulating element (13) for regulating the volume flow of the clear water discharged from the sludge removal chambers (8) is provided.

## Revendications

1. Procédé pour exploiter une installation de filtres flottants pour la séparation d'impuretés particulaires d'une eau brute à traiter comportant plusieurs récipients formant réacteur (10) de préférence en forme de réservoirs, en particulier dont la section transversale se rétrécit vers le bas en forme d'entonnoir, qui comportent dans le domaine du fond une amenée d'eau brute (1) et dans le domaine supérieur une évacuation d'eau clarifiée (4) par laquelle une eau clarifiée sensiblement débarrassée des impuretés particulaires s'écoule des récipients formant réacteur (10), ainsi que des chambres d'évacuation de boue (8) disposées entre ou à côté des récipients formant réacteur (10) et communiquant hydrauliquement avec ceux-ci à une hauteur déterminée à distance de leur fond, desquelles les impuretés précipitées depuis l'eau brute sont évacuées sous forme de boue par le biais d'un dispositif d'évacuation de boue (7), **caractérisé en ce que** de la boue n'est évacuée au même moment que d'une partie des chambres d'évacuation de boue (8) de l'installation de filtres flottants, de préférence que d'une seule chambre d'évacuation de boue (8), et **en ce que**, pendant l'évacuation de la boue, les amenées d'eau brute (1) des récipients formant réacteur (10) reliés hydrauliquement directement avec les chambres d'évacuation de boue (8) correspondantes sont fermées au moyen de dispositifs obturateurs (6) et sont réouvertes après l'évacuation de la boue.

2. Procédé selon la revendication 1, **caractérisé en ce que** le courant volumique de l'eau clarifiée évacuée ou qui s'écoule de l'installation de filtres flottants totale est mesuré en permanence et est régulé à une valeur constante réglable par régulation du courant volumique de l'eau brute apportée.

3. Procédé selon la revendication 1 ou 2, **caractérisé en ce que** les dispositifs obturateurs (6) sont actionnés électriquement, pneumatiquement ou hydrauliquement en étant commandés à distance.

4. Installation de filtres flottants pour la séparation d'impuretés particulaires d'une eau brute à traiter comportant plusieurs récipients formant réacteur (10) de préférence en forme de réservoirs, en particulier dont la section transversale se rétrécit vers le bas en forme d'entonnoir, qui comportent dans le domaine du fond une amenée d'eau brute (1) et dans le domaine supérieur une évacuation d'eau clarifiée (4) par laquelle l'eau clarifiée sensiblement débarrassée des impuretés particulaires s'écoule des récipients formant réacteur (10), ainsi que des chambres d'évacuation de boue (8) disposées entre ou à côté des récipients formant réacteur (10) et communiquant hydrauliquement avec ceux-ci à une hauteur déterminée à distance de leur fond, desquelles les impuretés précipitées depuis l'eau brute sont évacuées sous forme de boue par le biais d'un dispositif d'évacuation de boue (7), **caractérisée en ce qu'**il est prévu des dispositifs obturateurs (6) pouvant être actionnés électriquement, pneumatiquement ou hydrauliquement en étant commandés à distance, avec lesquels l'amenée d'eau brute (1) de chaque récipient formant réacteur (10) peut être fermée pendant l'évacuation de la boue de la chambre d'évacuation de boue (8) communiquant hydrauliquement avec le récipient formant réacteur (10) correspondant et peut être réouverte après l'évacuation de la boue, **en ce qu'**il est prévu un dispositif de mesure (11) pour la mesure permanente du courant volumique d'eau clarifiée retirée ou qui s'écoule, qui comprend un dispositif de mesure de niveau pour la mesure du niveau d'eau clarifiée dans les récipients de l'installation de filtres flottants ainsi qu'une unité calculatrice (12) pour le calcul du courant volumique d'eau clarifiée qui s'écoule sur la base de la hauteur du niveau d'eau clarifiée, compte tenu des sections d'ouverture actuelles des amenées d'eau brute (1), et **en ce qu'**il est prévu un élément régulateur (13) pour la régulation du courant volumique de l'eau clarifiée évacuée des chambres d'évacuation de boue (8).
